# EUROPÄISCHE PATENTANMELDUNG

(11) **EP 2 799 733 A1**
(43) Veröffentlichungstag der Anmeldung: **05.11.2014**
(21) Anmeldenummer: 13165881.7
(22) Anmeldetag: 30.04.2013
(51) Int. Cl.: F16D 7/04, F16D 7/10, F16D 41/12

(54) **Werkzeugmaschine**

(71) Anmelder: HILTI Aktiengesellschaft, 9494 Schaan (LI)
(72) Erfinder: Granacher, Thomas, 9494 Schaan (LI)
(74) Vertreter: Hilti Aktiengesellschaft Corporate Intellectual Property

(57) **Zusammenfassung**

Eine Rutschkupplung **19** ist für eine Handwerkzeugmaschine **1** zum Entkoppeln einer Werkzeugaufnahme **2** von einem antreibenden Motor **5** bei einer Überlast. Eine ringförmige Lauffläche **23** hat radial nach Innen vorstehende Nocken **24.** Die Rutschkupplung **19** hat einen Satz von Paaren aus jeweils einer vorgespannte Schraubenfeder **28** und einer Klinke **29.** Die Schraubenfeder **28** drückt einen Kopf **38** der Klinke **29** in radialer Richtung nach Außen an die Lauffläche **23.** Die Klinke **29** weist einen Blechstreifen **34** auf, dessen einer Abschnitt für den Kopf **38** zu einem bis auf einen Spalt ringförmig geschlossenes, hohles Prisma umgebogen ist. Ein Einsatz **35** ist den Spalt **41** ausfüllend in den Spalt **41** eingesetzt.

## Beschreibung

### GEBIET DER ERFINDUNG

Die vorliegende Erfindung betrifft eine Rutschkupplung für eine Handwerkzeugmaschine, wie aus der DE102009046475A bekannt.

### OFFENBARUNG DER ERFINDUNG

Die erfindungsgemäße Rutschkupplung ist für eine Handwerkzeugmaschine zum Entkoppeln einer Werkzeugaufnahme von einem antreibenden Motor bei einer Überlast. Eine ringförmige Lauffläche hat radial nach Innen vorstehende Nocken. Die Rutschkupplung hat einen Satz von Paaren aus jeweils einer vorgespannte Schraubenfeder und einer Klinke. Die Schraubenfeder drückt einen Kopf der Klinke in radialer Richtung nach Außen an die Lauffläche. Die Klinke weist einen Blechstreifen auf, dessen einer Abschnitt für den Kopf zu einem bis auf einen Spalt ringförmig geschlossenes, hohles Prisma umgebogen ist. Ein Einsatz ist den Spalt ausfüllend in den Spalt eingesetzt.

Die Rutschkupplung hat eine Lauffläche, welche in Grundstellung ein Drehmoment auf die Klinken per Kraft- und Reibschluss überträgt. Bei Überlast werden die Klinken gegen die Kraft der Schraubenfedern soweit ausgelenkt, bis die Klinken nicht mehr an der Lauffläche anliegen. Die Rutschkupplung öffnet hierdurch den Antriebsstrang der Handwerkzeugmaschine. Die Schraubenfedern drängen die Klinken zurück in die Grundstellung. Die Belastungen auf die Klinken beim Öffnen und Rückführen in die Grundstellung hängen unter Anderem von der Drehzahl der Rutschkupplung ab, insbesondere, wenn Resonanzen der Klinke angeregt werden.

Der vorzugsweise lose eingesetzte Einsatz führt zu einer Dämpfung der Resonanzen, wodurch signifikant die Lebensdauer der Klinken erhöht wird. Eine klassische Verstärkung, z.B. durch dickere Blechstreifen zeigt keine wesentliche Verbesserung der Lebensdauer.

Eine Ausgestaltung sieht vor, dass eine Spaltweite des Spalts geringer als eine Stärke des Blechsteifens ist. Der Einsatz ist in dem Spalt geklemmt.

Der Kopf kann eine Kontaktfläche und eine Stützfläche aufweisen, wobei die Kontaktfläche an der Lauffläche anliegt und eine der Klinke paarweise zugehörige Schraubenfeder an der Stützfläche anliegt. Die Kontaktfläche und die Stützfläche sind durch den Blechstreifen gebildet. Ein von der Kontaktfläche abgewandtes Ende der Stützfläche liegt an dem Einsatz, an. Eine Ausgestaltung sieht vor, dass das Ende unter Vorspannung gegen den Einsatz, geklemmt ist. Die von der Schraubenfeder beaufschlagte Fläche ist an ihrem offenen Ende an dem Einsatz abgestützt. Das Ende kann auf dem Einsatz gleiten und Vibrationen dämpfen.

Eine Ausgestaltung sieht vor, dass der Blechstreifen zu einem zylindrischen Lagerkopf, einem ebenen Hebelarm und dem prismatischen Kopf gebogen ist. Der Einsatz kann formschlüssig in dem zylindrischen Lagerkopf gehalten sein. Ein Verrutschen des Einsatzes wird somit verhindert.

Eine Ausgestaltung sieht vor, dass der Kopf hohl ist. Der Hohlraum nimmt wenigstens 25 %, vorzugsweise wenigstens 50 % des Volumens des Kopfs ein.

Eine Ausgestaltung sieht vor, dass der Einsatz aus Kunststoff oder Titan ist.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Bohrhammer
- Fig. 2: eine Rutschkupplung
- Fig. 3: einen Grundkörper einer Klinke
- Fig. 4: eine Klinke
- Fig. 5: eine Klinke
- Fig. 6: eine Klinke

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

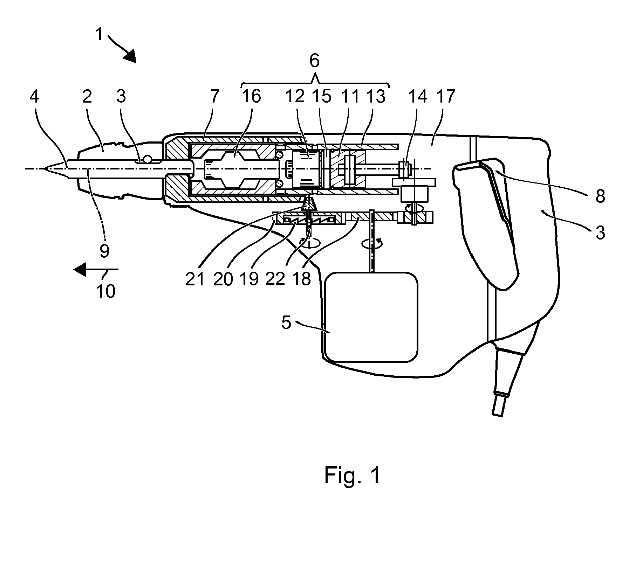

Fig. 1 zeigt als Beispiel einer meißelnden Handwerkzeugmaschine schematisch einen Bohrhammer **1.** Der Bohrhammer **1** hat eine Werkzeugaufnahme **2,** in welche ein Schaftende **3** eines Werkzeug, z.B. eines des Bohrmeißels **4,** eingesetzt werden kann. Einen primären Antrieb des Bohrhammers **1** bildet ein Motor **5,** welcher ein Schlagwerk **6** und eine Abtriebswelle **7** antreibt. Ein Anwender kann den Bohrhammer **1** mittels eines Handgriffs **3** führen und mittels eines Systemschalters **8** den Bohrhammer **1** in Betrieb nehmen. Im Betrieb dreht der Bohrhammer **1** den Bohrmeißel **4** kontinuierlich um eine Arbeitsachse **9** und kann dabei den Bohrmeißel **4** in Schlagrichtung **10** längs der Arbeitsachse **9** in einen Untergrund schlagen.

Das Schlagwerk **6** ist beispielsweise ein pneumatisches Schlagwerk **6.** Ein Erreger **11** und ein Schläger **12** sind in einem Führungsrohr **13** des Schlagwerks **6** längs der Arbeitsachse **9** beweglich geführt. Der Erreger **11** ist über einen Exzenter **14** oder einen Taumelfinger an den Motor **5** angekoppelt und zu einer periodischen, linearen Bewegung gezwungen. Eine Luftfeder gebildet durch eine pneumatische Kammer **15** zwischen Erreger **11** und Schläger **12** koppelt eine Bewegung des Schlägers **12** an die Bewegung des Erregers **11** an. Der Schläger **12** kann direkt auf ein hinteres Ende des Bohrmeißels **4** aufschlagen oder mittelbar über einen im Wesentlichen ruhenden Zwischenschläger **16** einen Teil seines Impuls auf den Bohrmeißel **4** übertragen. Das Schlagwerk **6** und vorzugsweise die weiteren Antriebskomponenten sind innerhalb eines Maschinengehäuses **17** angeordnet.

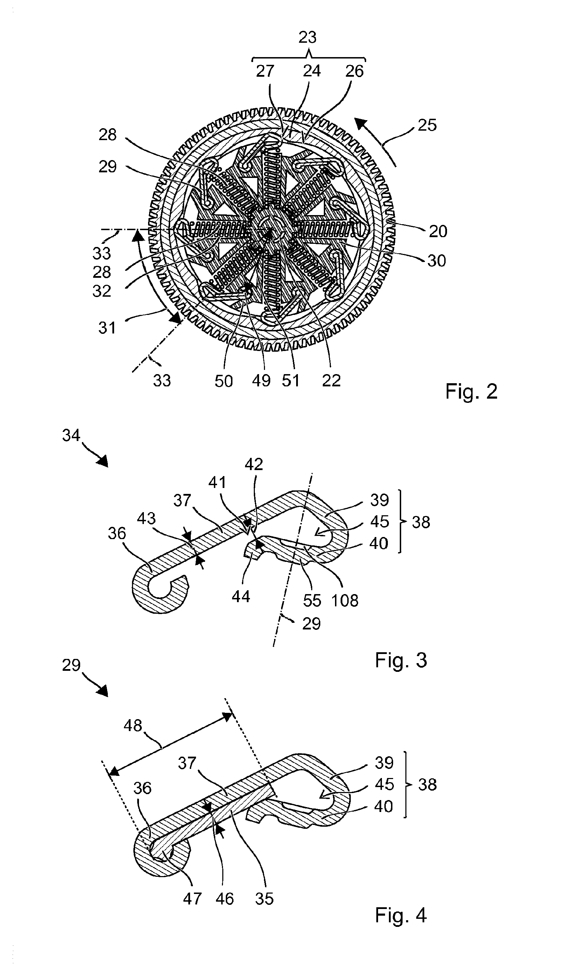

Die Abtriebswelle **7** ist über ein Getriebe **18** und eine Rutschkupplung **19** an den Motor **5** angekoppelt. Die Rutschkupplung **19** löst aus, wenn das an der Abtriebswelle **7** anliegende Drehmoment einen Schwellwert überschreitet, z.B. wenn der Bohrmeißel **4** blockiert ist. Die beispielhafte Rutschkupplung **19** hat antriebsseitig ein hohles Zahnrad **20** und abtriebsseitig ein Kegelrad **21** (Fig. 2). Die Rutschkupplung **19** ist in das hohle Zahnrad **20** eingesetzt und koppelt das hohle Zahnrad **20** an eine Welle **22** des Kegelrads **21.**

Die Antriebsseite **20** hat eine ringförmige Lauffläche **23,** die koaxial zu der Welle **22** angeordnet ist. Die Lauffläche **23** hat radial nach Innen vorstehende Nocken **24.** Die Nocken **24** haben eine in Drehrichtung **25** vordere Flanke **27** und eine hintere Flanke **26.** Die vordere Flanke **27** kann steiler als die hintere Flanke **26** sein.

Die Abtriebsseite **21** hat mehrere Schraubenfedern **28** und eine gleiche Anzahl von Klinken **29,** die auf einem Teller **30** angeordnet sind. Der Teller **30** hat mehrere in gleichen Winkelabständen **31** angeordnete Taschen **32,** in die jeweils eine Schraubenfeder **28** eingelegt ist. Die Schraubenfedern **28** sind radial zu der Welle **22** orientiert. Jede der Schraubenfedern **28** definiert eine Achse **33,** die senkrecht durch die Welle **22** verläuft. Die von den Schraubenfedern **28** ausgeübten Kräfte wirken senkrecht auf die Welle **22** ein.

Jede der Schraubenfedern **28** ist mit einer Klinke **29** gepaart. Die Klinken **29** bestehen jeweils aus einem gebogenen Blechstreifen **34** und einem Einsatz **35.** Der Einsatz **35** ist vorzugsweise aus einem anderen Material wie der Blechstreifen **34.**

Der Blechstreifen **34** ist zu einem Lagerkopf **36,** einem Hebelarm **37** und einem hohlen Kopf **38** gebogen (Fig. 4). Ein mittlere Abschnitt des Blechstreifens **34** bildet den Hebelarm **37** und ist im wesentlichen eben ausgebildet. Ein äußerer, unmittelbar an den mittleren Abschnitt angrenzender Abschnitt des Blechstreifens **34** ist zu einer hohlzylindrischen Außenkontur umgebogen, welche den Lagerkopf **36** bildet. Die zylindrische Außenkontur umspannt einen Winkel zwischen 200 Grad und 300 Grad, z.B. 270 Grad. Der andere an den mittleren Abschnitt angrenzende äußere Abschnitt des Blechstreifens **34** ist zu dem hohlen Kopf **38** umgeformt. Der Kopf **38** hat eine prismatische, dreiecksförmige Gestalt. Eine Seite wird durch den ebenen Hebelarm **37** abgeschlossen. Eine mit dem Hebelarm **37** verbundene zweite Seite **39,** nachfolgend Kontaktfläche **39,** ist zwischen 90 Grad und 135 Grad zu dem Hebelarm **37** geneigt. Die dritte sich an die Kontaktfläche **39** anschließende Seite **40,** nachfolgend Stützfläche **40,** ist gegenüber der Kontaktfläche **39** zwischen 22 Grad und 45 Grad geneigt. Die Stützfläche **40** und der Hebelarm **37** schließen einen spitzen Winkel zwischen 22 Grad und 45 Grad ein. Die Stützfläche **40** ist durch einen Spalt **41** von dem Hebelarm **37** beabstandet. Das Spaltmaß **42** des Spalts **41** ist vorzugsweise nicht größer als die Stärke **43** des Blechstreifens **34,** z.B. zwischen 25 % und 100 % der Stärke **43.** Der dem Hebelarm **37** zugewandte Rand **44** des Blechstreifens **34** kann aufgebogen oder abgerundet sein. Der Hohlraum **45** hat ein Volumen von etwa 50 % des gesamten Kopfes **38.**

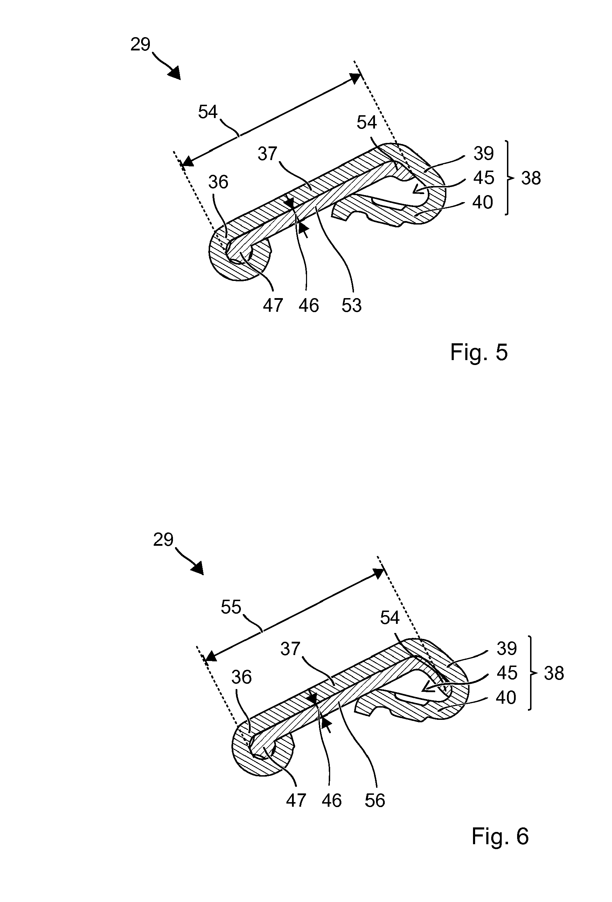

Der Einsatz **35** ist in dem Spalt **41** zwischen dem Hebelarm **37** und der Stützfläche **40** angeordnet (Fig. 5). Eine Stärke **46** des Einsatzes **35** ist vorzugsweise größer als das Spaltmaß **42** des Spalts **41,** z.B. um 10 % bis 50 % größer. Der Einsatz **35** ist durch den Rand **44** an den Hebelarm **37** angeklemmt.

Der beispielhafte Einsatz **35** ist ein flaches Plättchen, das flächig an dem Hebelarm **37** anliegt. Ein Ende **47** des Einsatzes **35** ist verdickt, beispielsweise zu einer zylindrischen Kontur. Das Ende **47** ist formschlüssig in dem von dem Lagerkopf **36** umschlossenen Hohlraum **45** eingesetzt. Hierdurch ist ein Verschieben des Einsatzes **35** längs des Hebelarms **37** unterbunden. Die Länge **48** des Einsatzes **35** entspricht vorzugsweise dem Abstand des Lagerkopfs **36** von dem Spalt **41.** Der hohle Kopf **38** wird nicht oder nur in vernachlässigbarem Maß durch den Einsatz **35** gefüllt. Das Trägheitsmoment ist durch den Einsatz **35** nur geringfügig erhöht. Eine Breite des Einsatzes **35** ist etwa gleich der Breite des Hebelarms **37.**

Die Klinke **29** ist um eine Schwenkachse **49** verschwenkbar in den Teller **30** eingesetzt. Der Lagerbock **50** ist beispielsweise als zylindrische Aussparung in dem Teller **30** ausgebildet. Der Lagerkopf **36** kann formschlüssig in die Aussparung längs der Schwenkachse **49** eingesetzt werden. Die Schwenkachse **49** ist koaxial zu der Welle **22.** Der Abstand **51** zwischen der Schwenkachse **49** und der Welle **22** ist vorzugsweise größer als 75 % des Innenradius der Lauffläche **23.** Das Lager **50** ist gegenüber der paarweise zugehörigen Schraubenfeder **28** in Laufrichtung **25** der Welle nachfolgend versetzt. Bei der beispielhaften Ausgestaltung ist das Lager **50** in der Mitte zwischen der zugehörigen Schraubenfeder **28** und der in Laufrichtung **25** nachfolgenden Schraubenfeder **28** angeordnet.

Die Stützfläche **40** der Klinke **29** liegt auf der Achse **33** der gepaarten Schraubenfeder **28.** Vorzugsweise ist die Stützfläche **40** senkrecht zu der Achse **33** orientiert. Die Schraubenfeder **28** ist zwischen der Stützfläche **40** und der Tasche **32** vorgespannt eingesetzt. Die Klinke **29** ist infolge mit der Kontaktfläche **39** gegen die Lauffläche **23** gepresst. Die Neigung der Kontaktfläche **39** ist vorzugsweise näherungsweise gleich der Neigung der vorderen Flanke **27** der Nocke **24.** Die Lauffläche **23** kann soweit drehmomentfrei gegenüber den Klinken **29** gedreht werden, bis die federbelastete Kontaktfläche **39** an der Flanke **26** zum Anliegen kommt.

Die Stützfläche **40** hat eine Richtung zu der Schraubenfeder **28** vorstehende Noppe **52.** Die Noppe **52** ist in den Blechstreifen **34** eingeprägt. Die Schraubenfeder **28** umgreift die Noppe **52** mit ihrer letzten Windung bzw. einem von der letzten Windung gebildeten Ring. Hierdurch ist ein Gleiten der Schraubenfeder **28** entlang der Stützfläche **40** unterbunden, wenn die Klinke **29** ausgelenkt wird.

Ein anliegendes Drehmoment führt zu einem Auslenken der Klinke **29** gegen die Kraft der Schraubenfeder **28.** Überschreitet das Drehmoment einen kritischen Wert, wird die Klinke **29** um die gesamte Höhe der Nocke **24** ausgelenkt und die Lauffläche **23** kann sich drehmomentfrei weiterdrehen. Die Klinke **29** folgt auf der hinteren Flanke **26** der sich radial weitenden Lauffläche **23,** bis die Klinke **29** an der nächsten vorderen Flanke **27** anschlägt. Der Kopf **38** der Klinke **29** wird dabei durch die Schraubenfeder **28** dynamisch belastet. Der Spalt **41** in dem Kopf **38** ermöglicht ein Einfedern, wobei sich hauptsächlich der offene Rand **44** parallel zu dem Hebelarm **37** verschiebt. Die Reibung zwischen dem Rand **44** und dem Einsatz **35** dämpft Eigenschwingungen der Klinke **29.** Eigenschwingungen können bei der sich gleichmäßigen drehenden Rutschkupplung **19** angeregt werden und zu Ermüdungsbrüchen führen.

Der Einsatz **35** ist vorzugsweise aus Titan gefertigt. Der Reibkoeffizient zwischen Titan und Eisen (Blech) ist vorteilhafterweise für die dämpfenden Eigenschaften hoch. Eine Alternative besteht in Kunststoff, welches zwar einen geringeren Reibkoeffizienten mit Eisen aufweist, dafür aber bei elastischen Verformungen durch thermische Verluste eine Dämpfung bewirkt.

Fig. 5 zeigt eine weitere Ausgestaltung des Einsatzes **53.** Der Einsatz **53** ist ein längliches Plättchen. Das den Längsenden **54** aufgebogen ist. Die Länge **56** des Einsatzes **53** entspricht der Länge des Hebelarms **37,** wodurch die beiden Längsenden **54** in dem Lagerkopf **36** und in dem Kopf **38** an dem Winkel zwischen der Hebelarm **37** und der Kontaktfläche **39** anliegen. Die Stärke **46** und die Breite des Einsatzes **53** können wie bei der vorhergehenden Ausführungsform gewählt sein.

Der Einsatz **53** kann unter Vorspannung eingesetzt sein. Der Einsatz **53** ist senkrecht zu dem Hebelarm **37** vorgespannt. Dies kann beispielsweise durch eine entsprechende Grundform des Einsatzes **53** erreicht sein. Der Einsatz **35** ist über seine Länge **45** gekrümmt, wobei die dem Hebelarm **37** zugewandte Seite konkav ist.

Fig. 6 zeigt eine weitere Ausgestaltung des Einsatzes **56.** Der Einsatz **56** verläuft von dem Lagerkopf **36** bis zu dem Winkel zwischen Kontaktfläche **39** und Stützfläche **40.** Der Einsatz **56** verläuft somit entlang dem gesamten Hebelarm **37** und der gesamten Kontaktfläche **39.** Der Einsatz **56** ist formschlüssig eingesetzt, ggf. kann der Einsatz **35** unter einer Vorspannung eingesetzt sein. Der Einsatz **56** kann zu Eigenschwingungen bei den dynamischen Belastungen der Rutschkupplung **19** angeregt werden. Aufgrund des zu dem Blechstreifens **34** unterschiedlichen Materials und der leicht anderen Abmessungen, werden verschiedene Eigenfrequenzen von Einsatz **56** und Blechstreifen **34** erwartet. Der Formschluss bzw. Kraftschluss erlaubt eine reibungsbehaftete wechselseitige Ankopplung, wodurch ein Aufschwingen der Resonanzen unterdrückt ist.

Die der Stützfläche **40** gegenüberliegende Fläche **40** ist unbedeckt. Die Stützfläche **40,** insbesondere der Rand **44,** ist gegenüber dem Einsatz **35** längs dem Hebelarm **37** frei beweglich. Diese Ausführungsform des Einsatz **56** hat den höchsten Füllgrad des hohlen Kopfes **38.** Der Füllgrad liegt unter 50 %. Der Füllgrad ist das Volumenverhältnis des in dem Kopf **38** liegenden Abschnitts des Einsatzes **35** zu dem von dem Blechstreifen **34** umgrenzten definierten Hohlvolumen des Kopfes **38.**

Die Stärke **46** und die Breite des Einsatzes **56** können wie bei der vorhergehenden Ausführungsform gewählt sein.

## Patentansprüche

1. Rutschkupplung (19) für eine Handwerkzeugmaschine (1) zum Entkoppeln einer Werkzeugaufnahme (2) von einem antreibenden Motor (5) bei einer Überlast mit:
einer ringförmiger Lauffläche (23), die radial nach Innen vorstehende Nocken (24) aufweist,
einem Satz paarweise kombinierter vorgespannter Schraubenfedern (28) und Klinken (29), wobei die Schraubenfeder (28) einen Kopf (38) der Klinke (29) in radialer Richtung nach Außen an die Lauffläche (23) andrückt, wobei die Klinke (29) einen Blechstreifen (34) aufweist, dessen einer Abschnitt für den Kopf (38) zu einem bis auf einen Spalt ringförmig geschlossenes, hohles Prisma umgebogen ist, **dadurch gekennzeichnet, dass** ein Einsatz (35) den Spalt (41) ausfüllend in den Spalt (41) kraftschlüssig eingesetzt ist.

2. Rutschkupplung (19) nach Anspruch 1, **dadurch gekennzeichnet, dass** eine Spaltweite des Spalts (41) geringer als eine Stärke (46) des Blechsteifens (34) ist.

3. Rutschkupplung (19) nach Anspruch 1 oder 2, **dadurch gekennzeichnet, dass** der Kopf (38) eine Kontaktfläche (39) und eine Stützfläche (40) aufweist, wobei die Kontaktfläche (39) an der Lauffläche (23) anliegt und eine der Klinke (29) paarweise zugehörige Schraubenfeder (28) an der Stützfläche (40) anliegt, wobei die Kontaktfläche (39) und die Stützfläche (40) durch den Blechstreifen (34) gebildet sind und ein von der Kontaktfläche (39) abgewandtes Ende (44) der Stützfläche (40) an dem Einsatz (35) anliegt.

4. Rutschkupplung (19) nach Anspruch 3, **dadurch gekennzeichnet, dass** das Ende (44) unter Vorspannung gegen den Einsatz (35) geklemmt ist.

5. Rutschkupplung (19) nach einem der vorhergehenden Ansprüche, **dadurch gekennzeichnet, dass** der Blechstreifen (34) zu einem zylindrischen Lagerkopf (36), einem ebenen Hebelarm (37) und dem prismatischen Kopf (38) gebogen ist.

6. Rutschkupplung (19) nach Anspruch 5, **dadurch gekennzeichnet, dass** der Einsatz (35), formschlüssig in dem zylindrischen Lagerkopf (36) gehalten ist.

7. Rutschkupplung (19) nach einem der vorhergehenden Ansprüche, **dadurch gekennzeichnet, dass** der Kopf (38) hohl ist.

8. Rutschkupplung (19) nach einem der vorhergehenden Ansprüche, **dadurch gekennzeichnet, dass** der Einsatz (35) aus Kunststoff oder Titan ist.

9. Rutschkupplung (19) nach einem der vorhergehenden Ansprüche, **dadurch gekennzeichnet, dass** der Kopf (38) eine geprägte Noppe (52) aufweist, auf die die Schraubenfeder (28) aufgesetzt ist.
